# EUROPEAN PATENT SPECIFICATION

(11) **EP 0 464 205 B1**
(45) Date of publication and mention of the grant of the patent: **06.09.1995**
(21) Application number: 90904930.6
(22) Date of filing: 23.03.1990
(51) Int. Cl.: G06F 3/033, G06K 11/16, G06K 11/20

(54) **INPUT/OUTPUT DEVICE AND METHOD THEREOF**
EINGABE-/ABGABEANORDNUNG UND VERFAHREN DAZU
DISPOSITIF D'ENTREE/SORTIE ET PROCEDE RELATIF

(30) Priority: 24.03.1989 JP 72453/89
(43) Date of publication of application: 08.01.1992
(73) Proprietor: Wacom Company, Ltd., Saitama-ken, 349-11 (JP)
(72) Inventor: MURAKAMI, Azuma Wacom Co., Ltd., Kitakatsushika-gun Saitama 340-02 (JP); KIKUCHI, Akio Wacom Co., Ltd., Kitakatsushika-gun Saitama 340-02 (JP); CHIKAMI, Toshihide Wacom Co., Ltd., Kitakatsushika-gun Saitama 340-02 (JP)
(74) Representative: TER MEER STEINMEISTER & PARTNER GbR
(86) International application number: PCT/JP90/00389
(87) International publication number: WO 90/11563

(56) References cited:
- EP-A- 0 295 699
- JP-A-60 175 136
- JP-A-63 307 522
- PATENT ABSTRACTS OF JAPAN, vol. 13, no. 85 (P-834) 27 February 1989 & JP-A-63 268 027

## Description

The present invention relates to an input/output apparatus and method, the apparatus comprising a coordinate input device and a display device.

In a previously proposed apparatus of this type, the display device is combined with the coordinate input device, and a display section is superposed on a tablet which forms the input section of the coordinate input device. The detection of the input coordinate positions is achieved by exchange of electromagnetic waves between the tablet and an input (position) indicator.

In the coordinate input device, an electric wave of a predetermined frequency is transmitted from a loop coil of the tablet, and the transmitted electric wave is received by a tuner circuit incorporated in the input indicator. Then, an electric wave transmitted from the tuner circuit which has received the above electric wave, is received by the loop coil of the tablet which has already stopped transmitting the above electric wave, thereby producing induction voltage. This process will be repeated by sequentially switching over a plurality of loop coils one by one so that coordinate values of a position indicated by the input indicator are detected based on the induction voltages produced in the respective loop coils. These coordinate values are delivered to a host computer.

On the other hand, the host computer creates a video signal and a corresponding synch (synchronizing) signal based on various data including the above coordinate values of the indicated position, and then delivers those signals to the display device. The display device creates various control signals based on the synch signal, displays the data of one line in the video signal in response to a display data latch pulse among the control signals, and further repeats the above process in number corresponding to one screen to thereby display an image.

In such an apparatus, however, since the coordinate input device and the display device are operated in response to different clock pulses independently of each other, the noise due to, particularly, the display data latch pulse among the control signals for the display device is mixed into the reception signal in the tablet of the coordinate input device. This leads to the problem that the position detecting accuracy may be deteriorated, or a malfunction may occur.

An apparatus similar to the one described above has been disclosed in EP-A-0 295 699.

Further, JP-A-63 268 027 discloses an input/output apparatus and method in which the position indicator is provided with an active transmitter for transmitting electromagnetic waves which are received by an array of loop coils provided in the tablet. The loop coils are scanned in order to detect the loop coil which has been excited by the electromagnetic wave.

This document is particularly concerned with eliminating the adverse effect of noise which is produced by a liquid crystal drive waveform AC transforming signal which is generated in the display device. To this end, the liquid crystal drive waveform AC transforming signal is delayed in a delay circuit, and the delayed signal is combined with the undelayed signal by an EXOR circuit, thereby to provide a signal for synchronizing the operation of the coordinate detecting circuit with the display device. This synchronization is such that a scan of the loop coils in the tablet is performed in the interval between subsequent rises and falls of the liquid crystal drive waveform AC transforming signal, so that the noise generated thereby will not disturb the detection of the coordinate position.

It is a primary object of the present invention to provide an input/output apparatus and method of the first mentioned type, in which an adverse influence due to the noise from the display data latch pulses can be eliminated.

This object is achieved by the features indicated in the independent claims 1 and 4.

Useful details of the apparatus and method according to the invention are specified in the dependent claims.

Other objects, arrangements and advantages of the present invention will be apparent from reading the following description.

### Brief Description of the Drawings

Fig. 1 is a block diagram showing one embodiment of an apparatus implementing an input/output method of the present invention,
Fig. 2 is a view showing a detailed arrangement of a position detecting unit,
Fig. 3 is a perspective view showing an appearance of the input/output apparatus of the present invention,
Fig. 4 is a chart showing signal waveforms at various points in the circuit of Fig. 1,
Fig. 5 is a block diagram showing another embodiment of the present invention, and
Fig. 6 is a chart showing signal waveforms at various points in the circuit of Fig. 5.

### Best Mode for Carrying out the Invention

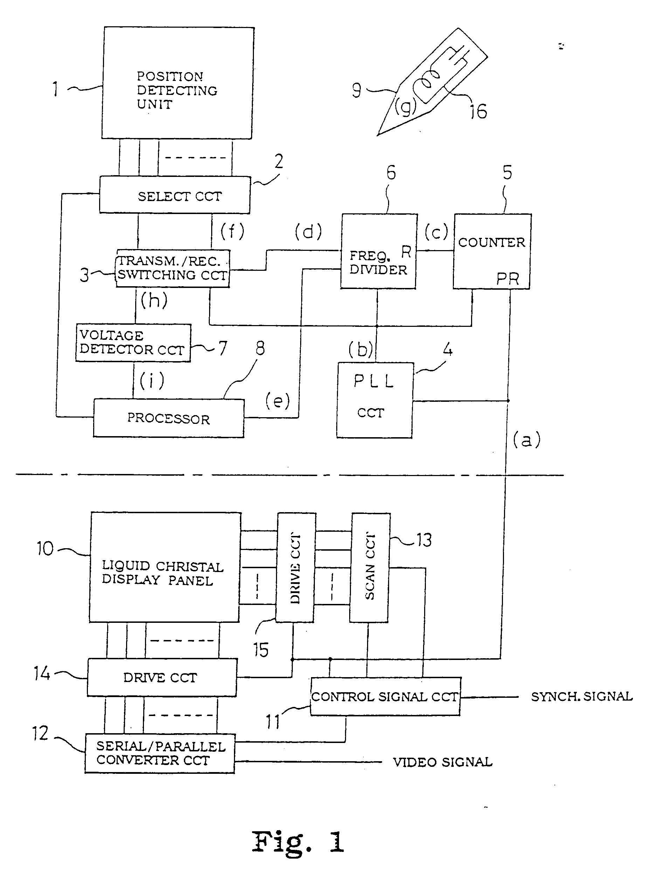

Fig. 1 shows one embodiment of an input/output apparatus of the present invention. In the drawing, denoted by reference numeral 1 is a position detecting unit, 2 is a select circuit, 3 is a transmission/reception switching circuit, 4 is a phase locked loop (PLL) circuit, 5 is a counter, 6 is a frequency divider, 7 is a voltage detector circuit, 8 is a processor, 9 is an input pen, 10 is a liquid crystal display panel, 11 is a control signal circuit, 12 is a serial/parallel converter circuit, 13 is a scan circuit, and 14, 15 are drive circuits.

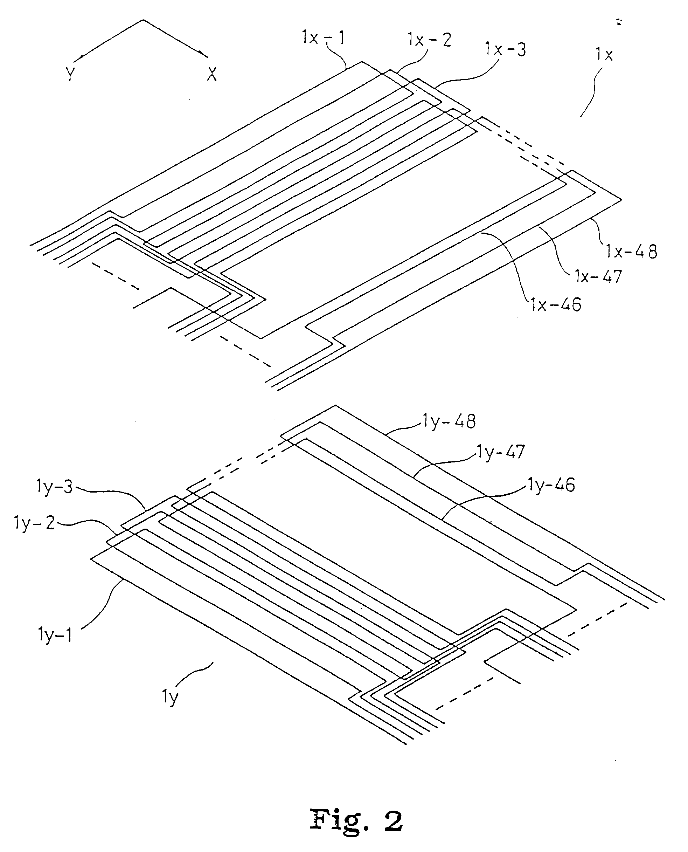

The position detecting unit 1 comprises, as shown in Fig. 2, a loop coil group 1x in the X-direction and a loop coil group 1y in the Y-direction. The loop coil group 1x in the X-direction comprises a number of loop coils, e.g., in number 48, 1x-1, 1x-2,..., 1x-48 which are arranged to be overlapped with and parallel to each other in the X-direction. Also, the loop coil group 1y in the Y-direction comprises a number of loop coils, e.g., in number 48, 1y-1, 1y-2,..., 1y-48 which are arranged to be overlapped with and parallel to each other in the Y-direction. The loop coil group 1x in the X-direction and the loop coil group 1y in the Y-direction are overlaid one above the other in closely intimate relation (though both the groups are shown as being spaced from each other in the drawing for better understanding). While each loop coil has one turn in the illustrated embodiment, it may have plural turns, if necessary.

The select circuit 2 sequentially selects one loop coil out of the loop coil group 1x in the X-direction and the loop coil group 1y in the Y-direction, that one loop coil being selected based on select information from the processor 8.

The transmission/reception switching circuit 3 alternately connects the selected one loop coil in the X- or Y-direction to the PLL circuit 4 via a drive circuit and a low-pass filter, both not shown, and the processor 8 via the voltage detector circuit 7, this switching operation being carried out in response to a transmission/reception switching signal described later.

The PLL circuit 4 creates, on the basis of a later-described display data latch pulse a of predetermined frequency fH, e.g., 12.5 kHz, a reference clock b of frequency f1 n times as many as the predetermined frequency fH, e.g., n = 32, that is, 400 kHz, followed by supplying the reference clock to the counter 5, the frequency divider 6, and the transmission/reception switching circuit 3 via a low-pass filter and a drive circuit (both not shown).

The counter 5 is a preset counter which is operated to preset an initial value m, that is, "28" in this embodiment, upon receiving the display data latch pulse a, and deliver a reset pulse c to the frequency divider 6 when the preset value is decremented upon receiving each reference clock b and counted down to "0".

The frequency divider 6 is reset by the reset pulse c and serves to divide the frequency of the reference clock b into 1/32 to create a transmission/reception switching signal d of predetermined frequency fk, that is, 12.5 kHz equal to the aforesaid frequency fH in this embodiment, followed by delivering the signal d to the transmission/reception switching circuit 3, and also divide the frequency of the reference clock b into 1/128 to create a loop coil switching signal e of predetermined frequency fc, that is, 3.125 kHz in this embodiment, followed by delivering the signal e to the processor 8.

The voltage detector circuit 7 comprises an amplifier, a ceramic filter having a passage band at the frequency f1, i.e., 400 kHz, a detector (rectifier), and a low-pass filter, thereby outputting a DC signal which has a voltage value corresponding to energy of the component of the frequency f1 contained in the signal applied thereto.

The processor 8 comprises a well-known microprocessor or the like, and serves to receive the loop coil switching signal e for controlling switching-over of the loop coils in the X- and Y-directions of the position detecting unit 1 from one to another via the select circuit 2, convert induction voltage values applied from the transmission/reception switching circuit 3 via the voltage detector circuit 7 through analog/digital (A/D) conversion, execute the predetermined operation process for calculating coordinate values of a position indicated by the input pen 9, and further deliver the resulting coordinate values to a host computer (not shown) or the like.

The input pen 9 constitutes an input indicator and incorporates a tuner circuit 16 comprising only passive elements such as a coil and a capacitor. The tuner circuit 16 has tuning frequency set to the frequency f1 of the aforesaid reference clock b, i.e., 400 kHz.

The liquid crystal display panel 10 is of the well-known matrix display type having liquid crystal media interposed between a number of horizontal and vertical electrodes.

The control signal circuit 11 creates various control signals such as the display data latch pulse a and a shift pulse based on a synch signal supplied from the host computer or the like along with a video signal.

The serial/parallel converter circuit 12 sequentially stores the video signal of serial data format in response to a shift pulse on a line by line basis.

The scan circuit 13 stores therein information indicating a position of the electrode to be driven among the number of horizontal electrodes in the liquid crystal display panel 10.

The drive circuits 14 and 15 serve to, upon application of the display data latch pulse a thereto, apply drive voltages to the vertical and horizontal electrodes of the liquid crystal display panel 10 in accordance with the items of information respectively stored in the serial/parallel converter circuit 12 and the scan circuit 13, for displaying an image of one line, and then repeat the above process to thereby display an image of one screen.

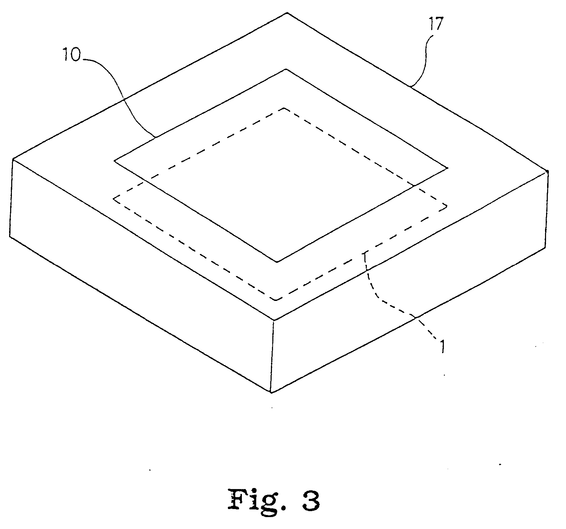

The foregoing circuits denoted by 1 to 8 jointly constitute the tablet and the foregoing circuits denoted by 10 to 15 jointly constitute the display device, these tablet and display device being both housed together as a unitary construction in a case 17 made of non-metallic material as shown in Fig. 3. In this connection, an input range of the position detecting unit 1 and a display area of the liquid crystal display panel 10 are set nearly equal to each other, and the liquid crystal display panel 10 is overlaid on the position detecting unit 1 via a backlight or a reflection plate permeable to electric waves (either not shown) such that the display position and the input position are held in match with each other.

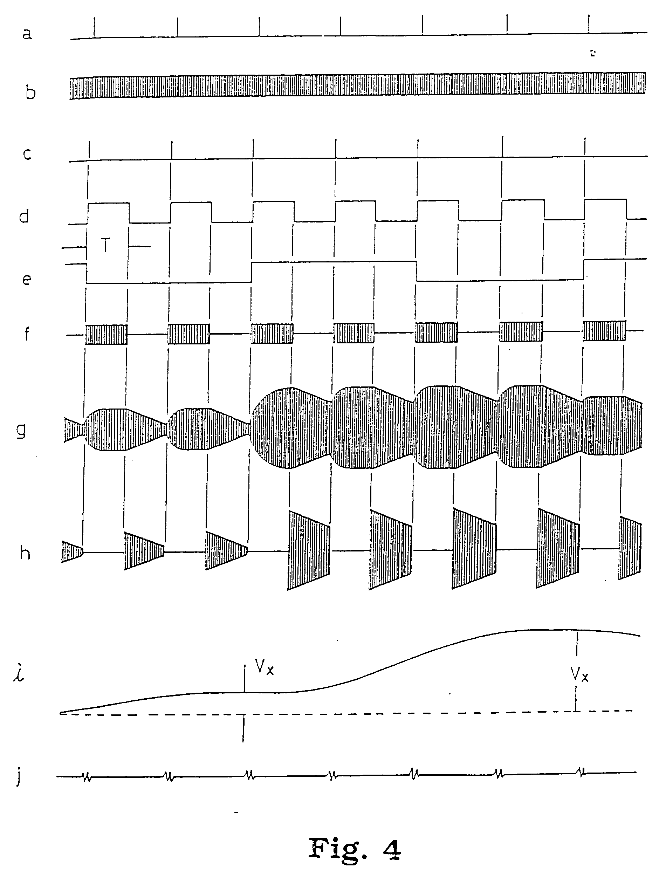

Operation of the input/output apparatus will be next described with reference to Fig. 4.

The above-mentioned reference clock b is converted via the low-pass filter and the drive circuit into a sine wave signal which is then delivered to the transmission/reception switching circuit 3. However, since the transmission/reception switching circuit 3 is switched over to be alternately connected to the PLL circuit 4 and the voltage detector circuit 7 based on the transmission/reception switching signal d, the signal outputted from the transmission/reception switching circuit 3 to the select circuit 2 is given by a signal f which provides pulses of 400 KHz and no pulses with intervals of time T (= 1/2 fk), that is, 40 µsec in this embodiment.

The above signal f is delivered to one loop coil, e.g., 1x-i (i = 1, 2,..., 48), in the position detecting unit 1 via the select circuit 2, whereupon the loop coil 1x-i generates an electric wave based on the signal f.

At this time, when the input pen 9 is held in a substantially upright state, i.e., a used state, on the position detecting unit 1 via the liquid crystal display panel 10, the above electric wave excites the tuner circuit 16 in the input pen 9 so that the tuner circuit 16 produces induction voltage g in synchronism with the signal f.

Thereafter, when the signal f enters the period free of pulses, i.e., the reception period, and the loop coil 1x-i is switched over for connection to the voltage detector circuit 7, the electric wave from the loop coil 1x-i immediately disappears, whereas the induction voltage g gradually attenuates depending on the loss of the tuner circuit 16.

On the other hand, the current flowing through the tuner circuit 16 due to the induction voltage g transmits an electric wave. This electric wave reversely excites the loop coil 1x-i connected to the voltage detector circuit 7 so that the loop coil 1x-i now produces induction voltage due to the electric wave from the tuner circuit 16. This induction voltage is outputted from the transmission/reception switching circuit 3 only during the reception period to become a reception signal h which is then delivered to the voltage detector circuit 7.

Although the reception signal h is a signal containing an intermittent component of the frequency f1, the voltage detector circuit 7 includes the ceramic filter having a passage band set at the frequency f1 as mentioned above. Therefore, the signal h is converted into a DC signal i having a continuous voltage value, the DC signal i being delivered to the processor 8.

The voltage value of the above signal i is changed depending on energy of the component of the frequency f1 contained in the signal h. In practice, however, the process of transmitting and receiving the electric wave between one loop coil 1x-i and the input pen 9 is repeated in plural times, i.e., 4 times in this embodiment. Thus, the signal component having the same energy is inputted in the predetermined number, i.e., four or more in this embodiment, so that the voltage value of the signal i is settled to become a constant voltage value Vx.

The voltage value Vx of the signal i takes a value depending on the distance between the input pen 9 and the loop coil 1x-i, that is, a value almost inversely proportional to the fourth power of the distance, and varies each time the loop coil 1x-i is switched over. Therefore, the X-direction coordinate value of a position indicated by the input pen 9 can be determined by causing the processor 8 to convert the voltage value Vx obtained for each loop coil into a digital value and then execute the predetermined operation process for the resulting digital values. Moreover, the Y-direction coordinate value of the position indicated by the input pen 9 can be determined in a like manner.

Meanwhile, on the display device side, an image is displayed on the liquid crystal display panel 10 based on the video signal and the synch signal which are supplied from the host computer or the like. At this time, however, noise j occurs in synchronism with the generation of the display data latch pulse a.

Since the noise j occurs during the period in which the electric wave is being generated from the position detecting unit 1 on the tablet side, there is no fear that the noise j may mix into the reception signal h and thus may affect the voltage value Vx. Accordingly, it is possible to prevent a failure in detecting the position indicated by the input pen 9 and a lowering of the detection accuracy.

The details of the coordinate detecting operation are the same as in said previously proposed apparatus of the same type and, therefore, will not be explained here.

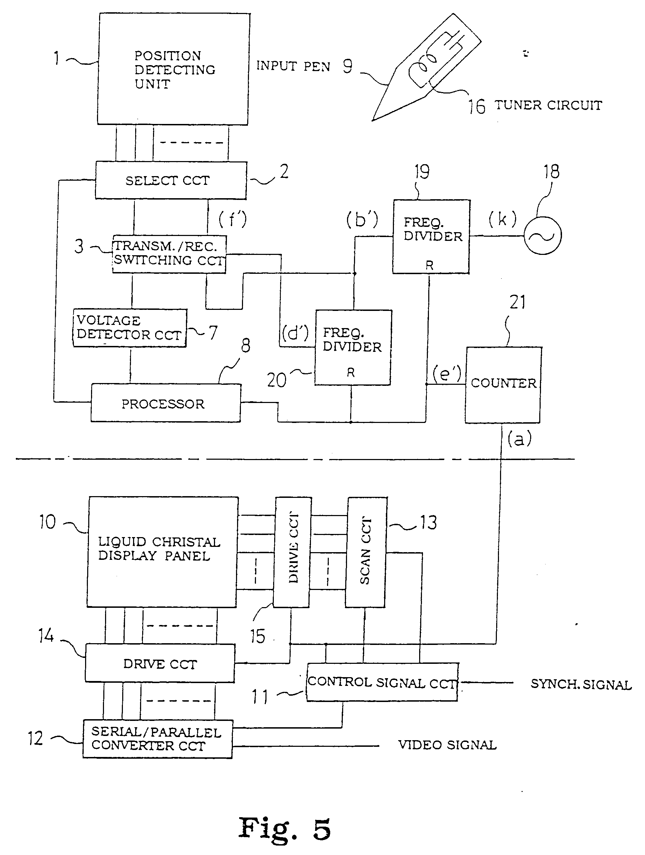

Fig. 5 shows another embodiment of the input/output apparatus of the present invention. In this embodiment, the tablet side includes a clock oscillator not in synchronism with the display data latch pulse. More specifically, in the drawing, denoted by 18 is a clock oscillator, 19, 20 are frequency dividers, and 21 is a tetrad counter. The clock oscillator 18 generates a clock pulse k of predetermined frequency f0, e.g., 1.78 MHz, and delivers it to the frequency divider 19. The frequency divider 19 divides the frequency of the clock pulse k into 1/4 to create a reference clock b′ of frequency f′, that is, 445 kHz in this embodiment, followed by delivering the reference clock b′ to both the transmission/reception switching circuit 3 and the frequency divider 20. The frequency divider 20 divides the frequency of the reference clock b′ into 1/32 to create a transmission/reception switching signal d′ of frequency fk′, that is, 13.9 kHz in this embodiment, followed by delivering the signal d′ to the transmission/reception switching circuit 3. The tetrad counter 21 receives, as an input signal, the aforesaid display data latch pulse a of the frequency fH, i.e., 12.5 kHz, and outputs one pulse for each four count of the pulse a to thereby create a loop coil switching signal e′, followed by delivering the signal e′ to reset terminals of the frequency dividers 19, 20 and the processor 8.

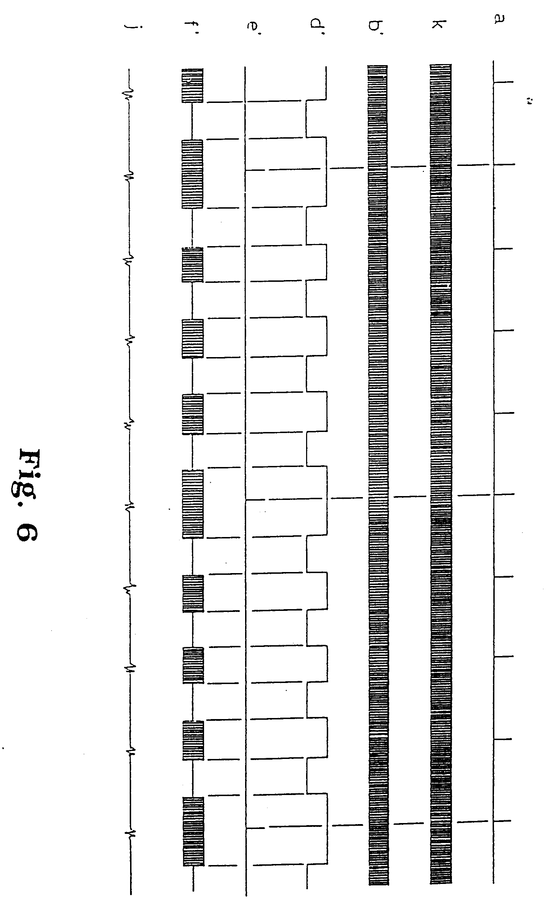

Fig. 6 shows signal waveforms at various points in the above circuit of Fig. 5. In this embodiment, too, the noise j in synchronism with the display data latch pulse a occurs during a period of the signal f′ in which the component of the frequency f1′ is present, i.e., during the transmission period. As a result, the noise j will not affect the operation of both the tablet and the input pen. Incidentally, other arrangement and operation are the same as those in the embodiment of Fig. 1 except for that the central frequency of passage band of the ceramic filter in the voltage detector circuit 7 and the tuning frequency of the tuner circuit 16 in the input pen 9 are each set to f1′.

While the tablet has been explained as switching over one loop coil so as to double as the loop coil for transmitting an electric wave and receiving the electric wave, separate loop coils may be provided for the specific purposes. It is also possible to vary the frequency or phase of the tuner circuit depending on a change in the operated state of the input pen, and to detect such a change on the tablet side for discriminating the operated state of the input pen.

## Claims

1. An input/output apparatus comprising:
a coordinate input device adapted to transmit an electric wave intermittently from a tablet (1) in accordance with a transmission/reception switching signal (d; d′), to excite by the electric wave, a tuner circuit (16) incorporated in an input indicator (9), to receive an electric wave transmitted from said tuner circuit to said tablet during periods in which the electric wave is not being transmitted from said tablet and to detect a coordinate value of a position indicated by said input indicator,
and a display device for displaying an image corresponding to the detected coordinate values, said display device being adapted to display the image line-by-line and comprising a drive circuit (14, 15) for applying, upon each pulse of a display data latch pulse signal (a) having a predetermined frequency, image information of one line to a display section (10),
**characterized** by means for synchronizing said transmission/reception switching signal to the cycle of said display data latch pulse signal (a) such that said pulses occur within the periods in which the electric wave is transmitted from the tablet.

2. Apparatus as claimed in claim 1. comprising:
means (4) for generating a reference clock signal (b) based on the display data latch pulse signal (a) such that the number of clock pulses is n times the number of display data latch pulses,
a counter (5) for counting a number m of clock pulses with m < n upon each display data latch pulse, to thereby generate a reset pulse (c) upon completion of said counting, and
means (6) for dividing the frequency of said reference clock signal in synchronism with said reset pulses, to thereby create said transmission/reception switching signal (d) a first period of which defines said transmission period and has the same cycle as the display data latch pulse signal and a subsequent period of which defines the reception period.

3. Apparatus as claimed in claim 1, comprising:
means (19) for generating a predetermined reference clock signal (b′),
a counter (21) for counting the display data latch pulses (a) in number not more than the quotient resulting from dividing the time corresponding to said transmission period by the difference between the cycle of the display data latch pulse signal and the cycle of the transmission/reception switching signal (d′), to thereby generate a reset pulse (e′) upon the completion of said counting, and
means (20) for dividing the frequency of said reference clock signal with the timing of supply of said reset pulse (e′) as a start point, to thereby create said transmission/reception switching signal of predetermined cycle consisting of a transmission period given by the first period thereof and a reception period given by a subsequent period thereof.

4. An input/output method to be carried out with a coordinate input device and a display device, comprising the steps of
transmitting an electric wave intermittently from a tablet (1) in accordance with a transmission/reception switching signal (d; d′),
exciting by the electric wave, a tuner circuit (16) incorporated in an input indicator (9),
receiving an electric wave transmitted from said tuner circuit to said tablet during periods in which the electric wave is not being transmitted from said tablet,
detecting a coordinate value of a position indicated by said input indicator and displaying the coordinate value on said display device,
wherein the image information is output on the display line-by-line and image information of one line is applied to a display section (10) of the display device upon each pulse of a display data latch pulse signal (a) having a predetermined frequency,
**characterized** in that the transmission/reception switching signal (d; d′) is synchronized to the cycle of said display data latch pulse signal (a) such that said pulses occur within the periods in which the electric wave is transmitted from the tablet.

5. A method as claimed in claim 4, comprising the further steps of
generating a reference clock signal (b) based on the display data latch pulse signal (a) such that the number of clock pulses is n times the number of display data latch pulses,
counting a number m of clock pulses with m < n upon each display data latch pulse. to thereby generate a reset pulse (c) upon completion of said counting, and
dividing the frequency of said reference clock signal in synchronism with said reset pulses, to thereby create said transmission/reception switching signal (d) a first period of which defines said transmission period and has the same cycle as the display data latch pulse signal and a subsequent period of which defines the reception period.

6. A method as claimed in claim 4, further comprising the steps of:
generating a predetermined reference clock signal (b′),
counting the display data latch pulses (a) in number not more than the quotient resulting from dividing the time corresponding to said transmission period by the difference between the cycle of the display data latch pulse signal and the cycle of said transmission/reception switching signal (b′), to thereby generate a reset pulse (e′) upon the completion of said counting, and
dividing the frequency of said reference clock signal with the timing of supply of said reset pulse (e′) as a start point, to thereby create said transmission/reception switching signal of predetermined cycle consisting of a transmission period given by the first period thereof and a reception period given by a subsequent period thereof.

## Patentansprüche

1. Eingabe/Ausgabe-Gerät mit:
einer Koordinateneingabeeinrichtung, die dazu ausgebildet ist, eine elektrische Welle in Übereinstimmung mit einem Sende/Empfangs-Umschaltsignal (d; d′) intermittierend von einem Tablett (1) auszusenden, um durch die elektrische Welle einen Schwingkreis (16) in einem Eingabezeiger (9) anzuregen, eine von dem Schwingkreis an das Tablett gesendete elektrische Welle in Perioden, in denen die elektrische Welle nicht von dem Tablett gesendet wird, zu empfangen und einen Koordinatenwert einer durch den Eingabezeiger angegebenen Position zu erfassen,
einer Anzeigeeinrichtung zur Anzeige eines den erfaßten Koordinatenwerten entsprechenden Bildes, welche Anzeigeeinrichtung dazu ausgebildet ist, das Bild Zeile für Zeile darzustellen, und eine Treiberschaltung (14, 15) aufweist, um auf jeden Impuls eines Anzeigedaten-Verriegelungsimpulssignals (a) mit einer vorgegebenen Frequenz hin Bildinformation für eine Zeile einem Anzeigeteil (10) zuzuführen,
**gekennzeichnet** durch Mittel zum Synchronisieren des Sende/Empfangs-Umschaltsignals mit dem Zyklus des Anzeigedaten-Verriegelungsimpulssignals (a) derart, daß diese Impulse innerhalb von Perioden auftreten, in denen die elektrische Welle vom Tablett gesendet wird.

2. Gerät nach Anspruch 1, mit:
Mitteln (4) zur Erzeugung eines Bezugs-Taktsignals (b) auf der Grundlage des Anzeigedaten-Verriegelungsimpulssignals (a) derart, daß die Anzahl von Taktimpulsen das n-fache der Anzahl der Anzeigedaten-Verriegelungsimpulse beträgt,
einem Zähler (5) zum Zählen einer Anzahl m von Taktimpulsen mit m < n bei jedem Anzeigedaten-Verriegelungsimpuls, um dadurch einen Rücksetzimpuls (c) bei Abschluß der Zählung zu erzeugen, und
Mitteln (6) zum Teilen der Frequenz des Bezugs-Taktsignals synchron mit den Rücksetzimpulsen, um dadurch das Sende/Empfangs-Umschaltsignal (d) zu erzeugen, in dem eine erste Periode die Sendeperiode bildet und denselben Takt hat wie das Anzeigedaten-Verriegelungsimpulssignal, und in dem eine nachfolgende Periode die Empfangsperiode bildet.

3. Gerät nach Anspruch 1, mit:
Mitteln (19) zum Erzeugen eines vorgegebenen Bezugs-Taktsignals (b′),
einem Zähler (21) zum Zählen der Anzeigedaten-Verriegelungsimpulse (a) in einer Anzahl, die nicht größer ist als der Quotient aus der der Sendeperiode entsprechenden Zeit dividiert durch die Differenz zwischen der Zykluszeit des Anzeigedaten-Verriegelungsimpulssignals und der Zykluszeit des Sende/Empfangs-Umschaltsignals (d′), um dadurch einen Rücksetzimpuls (e′) bei Abschluß dieser Zählung zu erzeugen, und
Mitteln (20) zum Teilen der Frequenz des Bezugs-Taktsignals mit der Zeit der Zufuhr des Rücksetzimpulses (e′) als Startpunkt, um dadurch das Sende/Empfangs-Umschaltsignal mit vorgegebenem Takt zu bilden, das aus einer durch seine erste Periode gegebenen Sendeperiode und einer durch eine nachfolgende Periode desselben gegebenen Empfangsperiode besteht.

4. Eingabe/Ausgabe-Verfahren zur Durchführung mit einer Koordinateneingabeeinrichtung und einer Anzeigeeinrichtung, mit den Schritten:
intermittierendes Senden einer elektrischen Welle von einem Tablett (1) in Übereinstimmung mit einem Sende/Empfangs-Umschaltsignal (d; d′),
Anregen eines Schwingkreises (16) in einem Eingabezeiger (9) mit der elektrischen Welle,
Empfangen einer von dem Schwingkreis an das Tablett gesendeten elektrischen Welle während Perioden, in denen die elektrische Welle nicht von dem Tablett gesendet wird,
Erfassen eines Koordinatenwertes einer mit dem Eingabezeiger angegebenen Position und Anzeigen des Koordinatenwertes auf der Anzeigeeinrichtung,
wobei die Bildinformation auf der Anzeigeeinrichtung zeilenweise ausgegeben wird und Bildinformation für eine Zeile einem Anzeigeteil (10) der Anzeigeeinrichtung bei jedem Impuls eines Anzeigedaten-Verriegelungsimpulssignals (a) zugeführt wird, das eine vorgegebene Frequenz besitzt,
dadurch **gekennzeichnet,** daß das Sende/Empfangs-Umschaltsignal (d; d′) so mit dem Takt des Anzeigedaten-Verriegelungsimpulssignals (a) synchronisiert ist, daß diese Impulse innerhalb der Perioden auftreten, in denen die elektrische Welle vom Tablett gesendet wird.

5. Verfahren nach Anspruch 4, mit den weiteren Schritten:
Erzeugen eines Bezugs-Taktsignals (b) auf der Grundlage des Anzeigedaten-Verriegelungsimpulssignals (a) derart, daß die Anzahl von Taktimpulsen das n-fache der Anzahl der Anzeigedaten-Verriegelungsimpulse beträgt,
Zählen einer Anzahl m von Taktimpulsen mit m ≦ n bei jedem Anzeigedaten-Verriegelungsimpuls, um dadurch einen Rücksetzimpuls (c) bei Abschluß der Zählung zu erzeugen, und
Teilen der Frequenz des Bezugs-Taktsignals synchron mit den Rücksetzimpulsen, um dadurch das Sende/Empfangs-Umschaltsignal (d) zu bilden, in dem eine erste Periode die Sendeperiode bildet und denselben Takt hat wie das Anzeigedaten-Verriegelungsimpulssignal, und in dem eine nachfolgende Periode die Empfangsperiode bildet.

6. Verfahren nach Anspruch 4, mit den weiteren Schritten:
Erzeugen eines vorgegebenen Bezugs-Taktsignals (b′),
Zählen der Anzeigedaten-Verriegelungsimpulse (a) in einer Anzahl, die nicht größer ist als der Quotient aus der Dauer der Sendeperiode dividiert durch die Differenz zwischen der Zykluszeit des Anzeigedaten-Verriegelungsimpulssignals und der Zykluszeit des Sende/Empfangs-Umschaltsignals (b′), um dadurch einen Rücksetzimpuls (e′) bei Abschluß der Zählung zu erzeugen, und
Teilen der Frequenz des Bezugs-Taktsignals mit der Zeit der Zufuhr des Rücksetzimpulses (e′) als Startpunkt, um dadurch das Sende/Empfangs-Umschaltsignal mit vorgegebenem Takt zu bilden, das aus einer durch dessen erste Periode gegebenen Sendeperiode und einer durch eine nachfolgende Periode desselben gegebenen Empfangsperiode besteht.

## Revendications

1. Dispositif d'entrée/sortie, comprenant:
un dispositif d'entrée de coordonnées conçu pour émettre de manière intermittente une onde électrique à partir d'une tablette (1) en fonction d'un signal (d; d′) de commutation d'émission/réception, pour exciter par l'onde électrique un circuit d'accord (16) incorporé dans un indicateur (9) d'entrée, pour recevoir une onde électrique émise depuis ledit circuit d'accord vers ladite tablette pendant des périodes durant lesquelles l'onde électrique n'est pas émise depuis ladite tablette et pour détecter une valeur de coordonnée d'une position indiquée par ledit indicateur d'entrée,
et un dispositif d'affichage pour afficher une image correspondant aux valeurs de coordonnées détectées, ledit dispositif d'affichage étant apte à afficher l'image ligne par ligne et comportant un circuit d'attaque (14, 15) pour appliquer des informations d'image d'une ligne à un organe d'affichage (10), à chaque impulsion d'un signal impulsionnel (a) de verrouillage de données d'affichage ayant une fréquence prédéterninée,
caractérisé par un moyen pour synchroniser ledit signal de commutation d'émission/réception par rapport au cycle dudit signal impulsionnel (a) de verrouillage de données d'affichage de telle façon que lesdites impulsions se produisent pendant les périodes durant lesquelles l'onde électrique est émise depuis la tablette.

2. Dispositif selon la revendication 1, comportant:
un moyen (4) pour générer un signal d'horloge de référence (b) sur la base du signal iipulsionnel (a) de verrouillage de données d'affichage de telle façon que le nombre d'impulsions d'horloge soit égal à n fois le nombre d'impulsions de verrouillage de données d'affichage,
un compteur (5) pour compter un nombre m d'impulsions d'horloge, m étant inférieur à n, à chaque impulsion de verrouillage de données d'affichage, pour produire de ce fait une impulsion (c) de mise à zéro au terme dudit comptage, et
un moyen (6) pour diviser la fréquence dudit signal d'horloge de référence en synchronisme avec lesdites impulsions de mise à zéro, afin de créer de ce fait ledit signal (d) de commutation d'émission/réception dont une première période définit ladite période d'émission et a le même cycle que le signal impulsionnel de verrouillage de données d'affichage et dont une période ultérieure définit la période de réception.

3. Dispositif selon la revendication 1, comportant:
un moyen (19) pour produire un signal d'horloge de référence prédéterminé (b′),
un compteur (21) pour compter les impulsions (a) de verrouillage de données d'affichage en nombre non supérieur au quotient résultant de la division du temps correspondant à ladite période d'émission par la différence entre le cycle du signal impulsionnel de verrouillage de données d'affichage et le cycle du signal (d′) de commutation d'émission/réception, pour produire de ce fait une impulsion (e′) de mise à zéro au terme dudit comptage, et
un moyen (20) pour diviser la fréquence dudit signal d'horloge de référence par le moment de l'application de ladite impulsion (e′) de mise à zéro en tant que point de départ, pour créer de ce fait ledit signal de commutation d'émission/réception à cycle prédéterminé constitué par une période d'émission donnée par la première période de celui-ci et par une période de réception donnée par une période ultérieure de celui-ci.

4. Procédé d'entrée/sortie destiné à être mis en oeuvre avec un dispositif d'entrée de coordonnées et un dispositif d'affichage, comprenant les étapes consistant à
émettre de façon intermittente une onde électrique depuis une tablette (1) en fonction d'un signal (d; d′) de commutation d'émission/réception,
exciter, par l'onde électrique, un circuit d'accord (16) incorporé dans un indicateur (9) d'entrée,
recevoir une onde électrique émise depuis ledit circuit d'accord vers ladite tablette pendant des périodes durant lesquelles l'onde électrique n'est pas émise depuis ladite tablette**,**
détecter une valeur de coordonnée d'une position indiquée par ledit indicateur d'entrée et afficher la valeur de coordonnée sur ledit dispositif d'affichage,
dans lequel les informations d'image sont produites ligne par ligne sur le dispositif d'affichage et les informations d'image d'une ligne sont appliquées à un organe d'affichage (10) du dispositif d'affichage à chaque impulsion d'un signal impulsionnel (a) de verrouillage de données d'affichage ayant une fréquence prédéterminée,
**caractérisé** en ce que le signal (d; d′) de commutation d'émission/réception est synchronisé par rapport au cycle dudit signal impulsionnel (a) de verrouillage de données d'affichage de telle façon que lesdites impulsions soient produites pendant les périodes durant lesquelles l'onde électrique est émise depuis la tablette.

5. Procédé selon la revendication 4, comportant en outre les étapes consistant à
générer un signal d'horloge de référence (b) sur la base du signal impulsionnel (a) de verrouillage de données d'affichage de telle façon que le nombre d'impulsions d'horloge soit égal à n fois le nombre d'impulsions de verrouillage de données d'affichage,
compter un nombre m d'impulsions d'horloge, m étant inférieur à n**,** à chaque impulsion de verrouillage de données d'affichage, pour produire de ce fait une impulsion (c) de mise à zéro au terme dudit comptage, et
diviser la fréquence dudit signal d'horloge de référence en synchronisme avec lesdites impulsions de mise à zéro, afin de créer de ce fait ledit signal (d) de commutation d'émission/réception dont une première période définit ladite période d'émission et a le même cycle que le signal impulsionnel de verrouillage de données d'affichage et dont une période ultérieure définit la période de réception.

6. Procédé selon la revendication 4, comportant en outre les étapes consistant à:
générer un signal d'horloge de référence prédéterminé (b′),
pour compter les impulsions (a) de verrouillage de données d'affichage en nombre non supérieur au quotient résultant de la division du temps correspondant à ladite période d'émission par la différence entre le cycle du signal impulsionnel de verrouillage de données d'affichage et le cycle du signal (d′) de commutation d'émission/réception, pour produire de ce fait une impulsion (e′) de mise à zéro au terme dudit comptage, et
diviser la fréquence dudit signal d'horloge de référence par le moment de l'application de ladite impulsion (e′) de mise à zéro en tant que point de départ, pour créer de ce fait ledit signal de commutation d'émission/réception à cycle prédéterminé constitué par une période d'émission donnée par la première période de celui-ci et par une période de réception donnée par une période ultérieure de celui-ci.
